# EUROPEAN PATENT SPECIFICATION

(11) **EP 0 317 157 B1**
(45) Date of publication and mention of the grant of the patent: **23.03.1994**
(21) Application number: 88310509.0
(22) Date of filing: 08.11.1988
(51) Int. Cl.: G10L 3/00

(54) **Distinguishing between audio and non-audio signals**
System zur Unterscheiden zwischen Audio- und Nicht-Audio-Signalen
Système pour faire la distinction entre des signaux audio et des signaux non audio

(30) Priority: 13.11.1987 JP 286764/87
(43) Date of publication of application: 24.05.1989
(73) Proprietor: SONY CORPORATION, Tokyo 141 (JP)
(72) Inventor: Nakano, Yoshitomo c/o Patents Division, Shinagawa-ku Tokyo 141 (JP)
(74) Representative: Cotter, Ivan John

(56) References cited:
- US-A- 3 832 491

## Description

This invention relates to circuits for distinguishing between audio and non-audio signals. Such circuits can, for example, be used in recording/reproducing apparatus that is voice controlled.

In a recording/reproducing apparatus using a magnetic tape, a solid-state memory, a magnetic disc or the like as a recording medium, it is known to conserve the space available on the recording medium by automatically setting a recording mode to record speech signals only when a person is actually speaking. These recorders are known as voice controlled, voice actuated or voice operated recorders and applications for such recording/reproducing apparatus include automatic telephone answering machines, memory machines, transcription machines and the like. In an apparatus which is to be voice controlled, a circuit for distinguishing between audio and non-audio signals, that is a circuit which judges the presence/absence of an input speech signal, may be employed.

A previously proposed audio/non-audio signal judging circuit compares the level of an input speech signal with a predetermined threshold level, determines that the speech signal is a non-audio signal when the speech signal is lower than the threshold level, and determines it to be an audio signal when it exceeds the threshold level. The threshold level for distinguishing between audio and non-audio signals is fixed at a predetermined value. Therefore, when there is a large, steady, noise disturbance, such as unusual ambient noise picked up by a microphone or a telephone line, then even if the user does not speak the noise level exceeds the predetermined threshold level and the presence of an audio (speech) signal is erroneously detected. As a result, the recording/reproducing apparatus is undesirably set in the recording state and this disturbance noise is erroneously recorded, thereby decreasing the utilisation rate of the recording medium and defeating one of the original purposes of the voice actuated recorder.

The problem can be particularly troublesome in an automatic telephone answering apparatus in which the telephone line is disengaged by detecting a non-audio signal, that is, the absence of speech, upon completion of a message from a caller. If a detection error is caused by noise, the telephone line will be kept DC-engaged even after the message is completed. For this reason, in addition to wasting the available space on the recording medium, the automatic telephone answering apparatus cannot prepare for the next incoming call because the telephone line has been incorrectly kept engaged.

In a Voice Operational Recording (VOR) mode of a dictating or transcription machine, the recording state can also be automatically started by a large noise disturbance, and the recording state will unnecessarily continue. As a result, it may not be possible to record an actual input speech signal because the recording medium has been used up.

United States Patent No. 3,832,491 discloses a voice switch in which sampled input audio signal values are compared with a threshold value to detect the percentage of time during which the threshold value is exceeded. A value of about 35% is characteristic of speech. The threshold value is adjusted to keep this percentage constant so as to compensate for loud and soft voices. The occurance of four successive sample value which exceed the threshold value is used to detect speech.

According to the invention there is provided a circuit for distinguishing between speech and non-speech signals for judging an input audio signal to be a non-speech signal when a level of the input audio signal is lower than a predetermined level and judging the input audio signal to be a speech signal when the level of the audio signal is higher than the predetermined level, the circuit comprising:
a comparator for comparing the level of the input audio signal with the predetermined level; characterised by
level changing control means for raising or lowering the level of the input speech signal inputted to the comparator by a predetermined amount in accordance with the ratio of a non-speech time duration of the input audio signal to a time period having a value equal to a predetermined constant; and
a variable gain amplifier and a band-pass filter only passing signals having a frequency within a speech band so connected that the input audio signal is passed therethrough before being inputted to the comparator, the level changing control means being operative to raise or lower the level of the input audio signal by the predetermined amount by controlling the gain of the variable gain amplifier.

The invention will now be further described, by way of illustrative and non-limiting example, with reference to the accompanying drawings, in which:
Figure 1 is a schematic representation in block diagram form of a system embodying the invention;
Figures 2A to 2C are timing charts for explaining the operation of the embodiment of Figure 1; and
Figure 3 is a circuit diagram showing part of the system shown in Figure 1 in more detail.

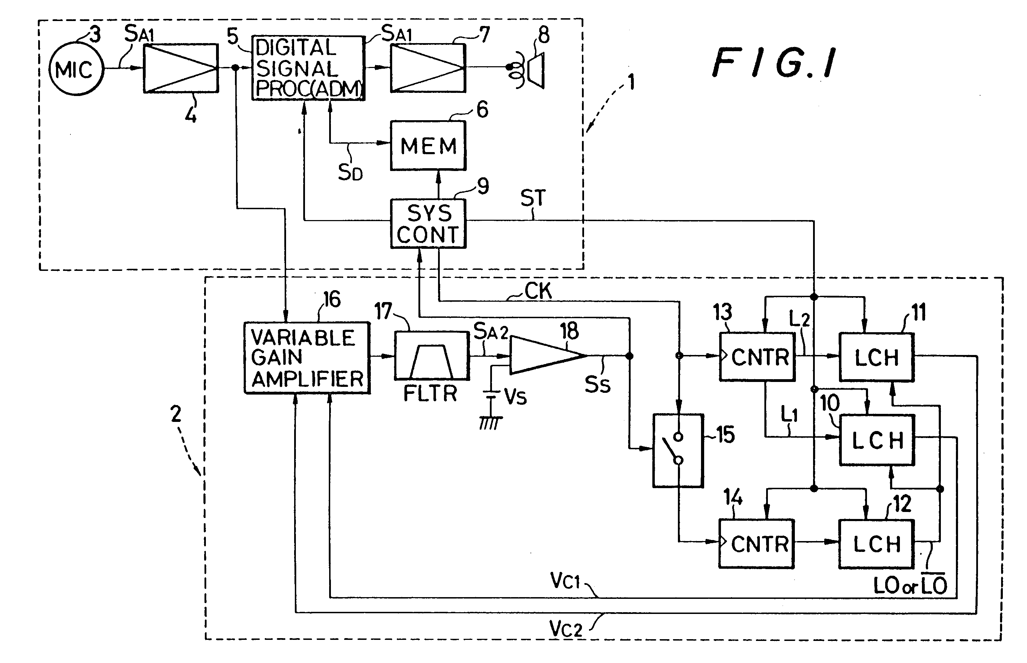

In the embodiment of Figure 1, the invention is applied to a digital recording/reproducing apparatus employing a solid-state memory as a recording medium. Figure 1 shows a system or apparatus that comprises a recording/reproducing section 1 and an audio/non-audio signal determination circuit section 2. When the recording/reproducing section 1 is in a recording mode, an input speech (analog) signal SA1 from a microphone 3 is raised in signal level by an input amplifier 4 and the amplified signal is supplied to a digital signal processing circuit 5 where it is converted into a digital signal. In this embodiment, the circuit 5 subjects the speech signal SA1 to the well-known adaptive delta modulation (ADM) processing and converts it into a one-bit digital speech signal SD. The signal SD is then recorded in a memory 6 that is constituted by a semiconductor memory or the like.

In a reproducing mode, the signal SD is read out from the memory 6 and demodulated into the original analog signal SA1 by the digital signal processing circuit 5. The reproduced analog signal SA1 is amplified by an output amplifier 7 and fed to a loudspeaker 8. A system controller 9 controls the operation of the processing circuit 5, as well as other circuits in the system, at predetermined timings in the recording and reproducing modes.

In the recording mode, the output signal from the input amplifier 4 is also supplied to the audio/non-audio signal determination circuit section 2 and is subjected therein to audio/non-audio signal determination, as will be described later. In accordance with this determination, only if the input digital signal SD is determined to be of an audio duration is it written in the memory 6 under the control of the system controller 9.

In the operation of the audio/non-audio judging circuit section 2, when a total non-audio duration as determined by a predetermined audio/non-audio signal threshold level is less than three seconds, within a first interval of 30 seconds from the start of recording, that is if the sum of the speech duration of a user as determined by the threshold level and the duration of the noise is long, it is determined that what is actually being recorded is noise that has continued for a long period of time. As a result, the threshold level is effectively raised by one step so as to decease the sensitivity to noise, thereby detecting only speech from the user. It will be appreciated, of course, that the time periods above are given by way of example only and that many other time periods could advantageously be employed.

In addition, if the total non-audio duration determined by the threshold level that has just been raised by one step is less than three seconds within the next 30 seconds following the interval of 30 seconds from the start of recording, it is determined that the undesirable noise has continued for a longer period of time. As a result, the threshold level is raised by another step so as further to decrease sensitivity to noise, thereby detecting only speech from the user. Thereafter, the threshold level is kept unchanged.

Moreover, if the total-audio duration is less than three seconds within an interval of 30 seconds from the start of recording, but it exceeds three seconds within an interval of 60 seconds from the start of recording, the threshold level is raised when the first interval of 30 seconds has elapsed, so as to detect only speech from the user. Thereafter, the threshold level is kept unchanged.

According to the above-described operation, when a total non-audio duration judged within a predetermined period of time is less than a set value (three seconds in this embodiment), the threshold level is raised as a result of determining that a large disturbance noise is present. Therefore, only speech from the user can be detected and erroneous operation and consumption of the available memory due to noise can be prevented.

The audio/non-audio signal determination circuit section 2 will now be described in detail with reference to Figure 1. When the recording/reproducing section 1 is set in the recording mode, the system controller 9 outputs a recording start signal ST and, in response to the signal ST, latch circuits 10, 11, and 12 are set while counters 13 and 14 are reset. In addition, the system controller 9 outputs a clock signal CK, having a predetermined frequency, which is supplied to the counter 13 to be counted therein. The clock signal CK is also fed to an input side of a switch 15. Initially, the gain of a variable gain amplifier 16, to which the output signal from the input amplifier 4 is supplied, is set to a maximum value.

When recording commences, the output signal from the input amplifier 4 is amplified by the variable gain amplifier 16 using its maximum gain, and the amplified signal is filtered by a band-pass filter 17 to produce a signal SA2 having frequencies only in the speech band. The level of the signal SA2 is compared with a predetermined threshold level V_{S} in a comparator 18, so that audio/non-audio signal determination is performed. A signal SS representing the result of this determination is supplied to the system controller 9 and is used to control the operation of the switch 15.

When the determination result indicated by the signal SS is "non-audio signal", the system controller 9 stops writing data obtained from the digital signal processing circuit 5 in the memory 6. At the same time, the switch 15 is closed by the signal SS and the clock signal CK from the system controller 9 is supplied to the counter 14 through the switch 15. Consequently, the counter 14 measures the total time duration of the non-audio signal. In this embodiment the maximum measurement time in the counter 14 is set to be three seconds.

When the counter 13 has counted clock pulses of the clock signal CK for 30 seconds from the start of recording, it outputs a 30-second latch trigger signal L1 to the latch circuit 10, and when the counter 13 has counted the clock pulses for 60 seconds from the start of recording it outputs a 60-second latch trigger signal L2 to the latch circuit 11. Note that the counter 13 always receives and counts the pulses of the clock signal CK, whereas the counter 14 only counts such clock pulses during the time when it is determined by the comparator 18 that a non-audio signal is present.

In addition, the latch circuit 12 latches the measurement result from the counter 14, that is the indication whether the total non-audio duration from the start of recording has reached three seconds or not, and the latch circuits 10 and 11 latch an output LO or L̅O̅ from the latch circuit 12. In this embodiment, the output LO represents that the measurement result from the counter 14 is less than three seconds, whereas the output L̅O̅ represents that such measurement exceeds three seconds. Output signals VC1 and VC2 from the latch circuits 10 and 11, respectively, are gain control signals for controlling the variable gain amplifier 16.

Examples of the operation of the system of Figure 1 are shown in Figures 2A to 2C. More specifically, in Figure 2A, because the measurement result of the non-audio duration from the counter 14 does not total three seconds in the first 30 seconds from the commencement of recording, the signal LO is outputted from the latch circuit 12 and the counter 13 outputs the 30-second latch trigger signal L1. The latch circuit 10 latches the output signal LO from the latch 12, and outputs the corresponding signal VC1 to the variable gain amplifier 16 to decrease its gain by one step. In this embodiment, one step of decrease in gain is set to be approximately 3dB.

Because the measured result of the duration of non-audio sound still does not total three seconds within the next 30 second period, the signal LO is outputted once again from the latch circuit 12. Then, the counter 13 outputs the 60-second latch trigger signal L2 to the latch circuit 11, and the latch circuit 11 latches the output signal LO and produces the signal VC2 which is fed to the variable gain amplifier 16, thereby decreasing the gain by another step, preferably 3dB.

Thus, because the gain of the variable gain amplifier 16 is decreased in the above-described manner, the predetermined threshold level of the comparator 18 is effectively raised by two steps.

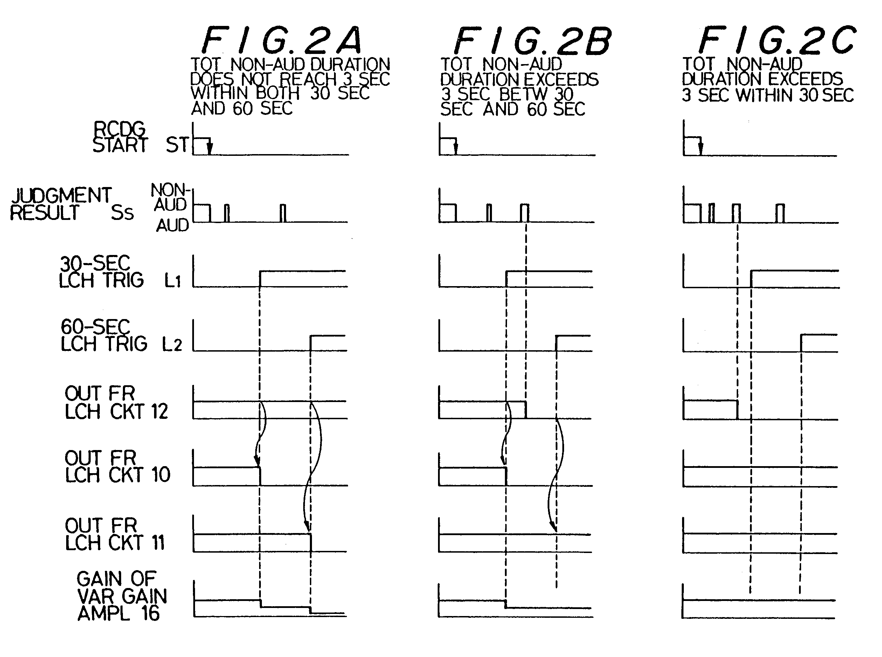

Figure 2B represents another example, in which, because the measured total duration of non-audio signal does not total three seconds within the first 30 seconds following commencement of recording, the output signal LO is outputted from the latch circuit 12. As a result, the signal VC1 is produced by the latch circuit 10 on the basis of the 30-second latch trigger signal L1, and the gain of the variable gain amplifier 16 is decreased by one step. Thus, the threshold level of the comparator 18 is effectively raised by one step (3dB).

Because the measured total duration of non-audio signals does exceed three seconds within the next successive 30 seconds, the output signal L̅O̅ is outputted from the latch circuit 12. The latch circuit 11 then latches the output signal LO in response to the 60-second latch trigger signal L2 from the counter 13, the signal VC2 is not produced, and the gain of the variable gain amplifier 16 remains unchanged. That is, the gain is held decreased by only one step. Therefore, the threshold level VS of the comparator 18 is effectively held increased by only one step (3dB).

Figure 2C represents another example, in which, because the measured total duration of non-audio signal exceed three seconds within the first 30 seconds, the output signal L̅O̅ is produced by the latch circuit 12. Therefore, because the latch circuit 10 latches the output LO in response to the 30-second latch trigger signal L1 from the counter 13, the signal VC1 is not produced, and the gain of the variable gain amplifier 16 is maintained unchanged at its original maximum level.

Because the latch circuit 11 latches the output signal L̅O̅ in response to the 60-second latch trigger signal L2 from the counter 13 even after the next 30 seconds have elapsed, the signal VC2 cannot be produced, and the variable gain amplifier 16 continues to hold the original maximum gain. Therefore, the threshold level VS of the comparator 18 remains substantially unchanged.

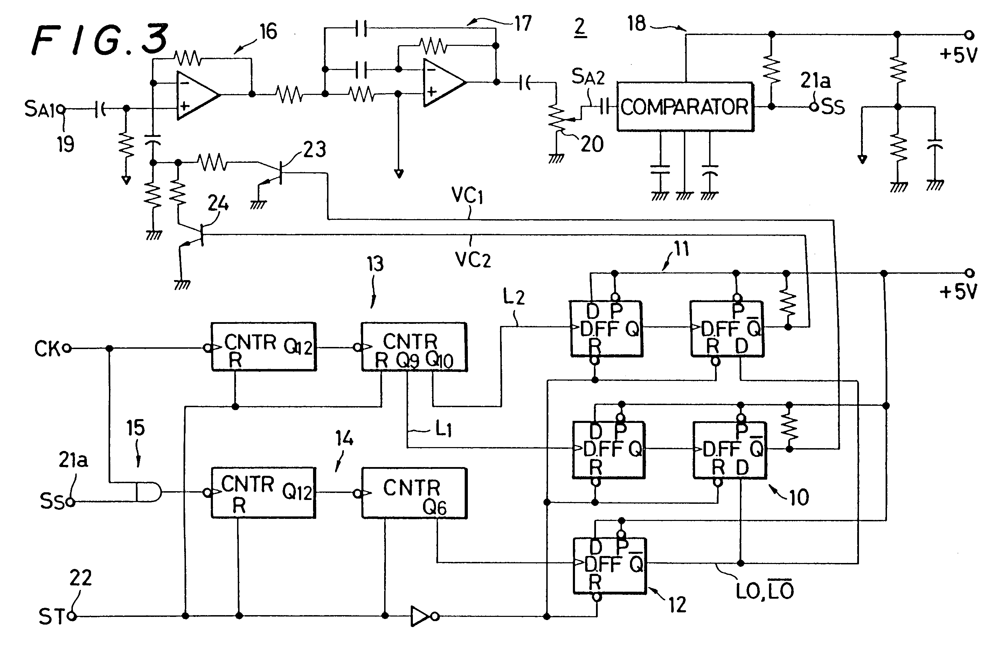

Figure 3 shows a detailed circuit arrangement of the audio/non-audio signal determination circuit section 2 of Figure 1. The same reference numerals in Figure 3 denote the same parts as in Figure 1. Referring to Figure 3, the speech signal SA1 amplified by the input amplifier 4, shown in Figure 1 but not shown in Figure 3, is supplied to an input terminal 19. The initial gain of the signal SA1 is set by a variable resistor 20 after passing through the variable gain amplifier 16 and the band-pass filter 17. Then, the signal SA1 is supplied to the comparator 18 and the comparison result signal SS produced by the comparator 18 is outputted at a terminal 21a and is supplied to an AND-gate, which constitutes the switch 15 of Figure 1. The various terminals 21a shown in Figure 3 are not shown to be connected, in the interest of schematic neatness, but it should be understood that the terminals 21a are electrically the same point.

In addition, the recording start signal ST is supplied from the system controller 9, shown in Figure 1, to an input terminal 22. In response to the signal ST, the counter 14 is reset and the latch circuits 10, 11, and 12 are set in predetermined states. (The latch circuits 10, 11, and 12 are constituted by D-type flip-flops in this embodiment.) The outputs signals LO and L̅O̅ from the latch circuit 12 are latched by the latch circuits 10 and 11, respectively. The output signals VC1 and VC2 from the latch circuit 10 are supplied to the bases of transistors 23 and 24, respectively, for controlling the gain of the variable gain amplifier 16.

The processing described above can also be performed by a microcomputer, and elements such as the counters and the latch circuit can be integrated in the microcomputer.

The invention can be applied not only to digital recording/reproducing apparatus, but also to recording/reproducing apparatus using magnetic tapes, magnetic disks, and the like.

In at least the preferred embodiments of the invention there is provided an speech/non-speech signal determination circuit in which an speech/non-speech signal threshold level is altered in accordance with the ratio of the duration of a non-speech input signal to a predetermined time. When the total non-speech duration within a predetermined time period is sensed to be short, it is determined that a long and steady noise that exceeds the existing judging level is present, and the speech/non-speech signal threshold or judging level is raised, whereas when the total non-specch duration is long, it is determined that a steady noise disturbance is not present and the threshold level is maintained, thereby accurately discriminating between speech and non-speech signals regardless of the presence of noise.

## Claims

1. A circuit for distinguishing between speech and non-speech signals for judging an input audio signal to be a non-speech signal when a level of the input audio signal is lower than a predetermined level and judging the input audio signal to be a speech signal when the level of the audio signal is higher than the predetermined level, the circuit (2) comprising:
a comparator (18) for comparing the level of the input audio signal with the predetermined level; characterised by
level changing control means (10 to 14) for raising or lowering the level of the input speech signal inputted to the comparator (18) by a predetermined amount in accordance with the ratio of a non-speech time duration of the input audio signal to a time period having a value equal to a predetermined constant; and
a variable gain amplifier (16) and a band-pass filter (17) only passing signals having a frequency within a speech band so connected that the input audio signal is passed therethrough before being inputted to the comparator (18), the level changing control means (10 to 14) being operative to raise or lower the level of the input audio signal by the predetermined amount by controlling the gain of the variable gain amplifier (16).

2. A circuit according to claim 1, wherein the level changing control means (10 to 14) comprises:
first counter means (14) for counting a total non-speech time duration and producing an output in accordance with an output from the comparator (18);
second counter means (13) for counting the time of the input audio signal and producing an output signal when a period of time having a value equal to the predetermined constant has elapsed; and
control signal generating means (10, 11, 12) for outputting a control signal for changing the level of the input speech signal inputted to the comparator (18) by a predetermined amount in response to the outputs from the first and second counter means (14, 13).

3. A circuit according to claim 2, wherein the control signal generating means (10, 11, 12) comprises:
first latch means (12) for latching the output from the first counter means (14) and outputting the latched output in dependence upon whether the total non-speech duration exceeds the period of time having a value equal to the predetermined constant; and
second latch means (10, 11) for latching the output from the second counter means (13) and outputting a control signal for altering the level of the input speech signal inputted to the comparator (18) by the predetermined amount in response to the output from the first latch means (12).

4. A circuit according to claim 3, wherein the second latch means (10, 11) comprises a plurality of latch circuits (10, 11) for respectively latching a plurality of outputs from the second counter means (13).

5. A circuit according to claim 2, wherein a plurality of periods of time are set each having a value equal to the predetermined constant, and the second counter means (13) counts the input time of the input audio signal and to produce an output signal when each period of time having a value equal to the predetermined constant has elapsed.

## Patentansprüche

1. Schaltung zum Unterscheiden zwischen Sprach- und Nichtsprachsignalen zum Bewerten eines Eingangsaudiosignals, ein Nichtsprachsignal zu sein, wenn ein Pegel des Eingangsaudiosignals kleiner ist als ein vorgegebener Pegel und zum Bewerten eines Eingangsaudiosignals, ein Sprachsignal zu sein, wenn der Pegel des Audiosignals höher als der vorgegebene Pegel ist, wobei die Schaltung (2) aufweist:
einen Komparator (18) zum Vergleichen des Pegels des Eingangsaudiosignals mit einem vorgegebenen Pegel; gekennzeichnet durch
Pegelwechselsteuerungsmittel (10 bis 14) zum Erhöhen oder Vermindern des Pegels des Eingangssprachsignals, das dem Komparator (18) mit einer vorgegebenen Höhe gemäß dem Verhältnis der Nichtsprachzeitdauer des Eingangsaudiosignals zu einer Zeitdauer zugeführt wird, die einen Wert gleich einer vorgegebenen Konstante hat; und
einen variablen Leistungsverstärker (16) und ein Bandpaßfilter (17), durch die nur Signale laufen, die eine Frequenz innerhalb eines Sprachbandes haben, die so angeschlossen sind, daß das Eingangsaudiosignal dadurch läuft, bevor es dem Komparator (18) zugeführt wird, wobei die Pegelwechselsteuerungsmittel (10 bis 14) wirksam sind, den Pegel des Eingangsaudiosignals um eine vorgegebene Höhe durch Steuern der Verstärkung des variablen Leistungsverstärkers (16) zu erhöhen oder zu senken.

2. Schaltung nach Anspruch 1, wobei die Pegelwechselsteuerungsmittel (10 bis 14) aufweisen:
erste Zählermittel (14) zum Zählen einer totalen Nichtsprachzeitdauer und Bilden eines Ausgangssignals gemäß einem Ausgangssignal vom Komparator (18);
zweite Zählermittel (13) zum Zählen der Zeit des Eingangsaudiosignals und Bilden eines Ausgangssignals, wenn eine Zeitdauer, die einen Wert gleich einer vorgegebenen Konstante hat, verstrichen ist; und
Steuersignalerzeugungsmittel (10, 11, 12) zum Ausgeben eines Steuersignals zum Wechseln des Pegels des Eingangssprachsignals, das dem Komparator (18) in einer vorgegebenen Höhe als Antwort auf die Ausgangssignale von den ersten und zweiten Zählermitteln (13, 14) zugeführt wird.

3. Schaltung nach Anspruch 2, wobei die Steuersignalerzeugungsmittel (10, 11, 12) aufweisen:
erste Speichermittel (12) zum Speichern des Ausgangssignals von den ersten Zählermitteln (14) und Ausgeben des gespeicherten Ausgangssignals in Abhängigkeit davon, ob die totale Nichtsprachdauer die Zeitdauer übersteigt, die einen Wert gleich einer vorgegebenen Konstante aufweist; und
zweite Speichermittel (10, 11) zum Speichern des Ausgangssignals von den zweiten Zählermitteln (13) und Ausgeben eines Steuersignals zum Ändern des Pegels des Eingangssprachsignals, das dem Komparator (18) in einer vorgegebenen Höhe als Antwort auf das Ausgangssignal von dem ersten Speichermitteln (12) zugeführt wird.

4. Schaltung nach Anspruch 3, wobei die zweiten Speichermittel (10, 11) eine Vielzahl von Speicherschaltungen (10, 11) zum jeweiligen Speichern einer Vielzahl von Ausgangssignalen von den zweiten Zählermitteln (13) aufweisen.

5. Schaltung nach Anspruch 2, wobei eine Vielzahl von Zeitdauern eingestellt werden, von denen jede einen Wert gleich der vorgegebenen Konstante aufweist, und wobei die zweiten Zählermittel (13) die Eingangszeit des Eingangsaudiosignals zählen, und um ein Ausgangssignal zu erzeugen, wenn jede Zeitdauer, die einen Wert gleich der vorgegebenen Konstante hat, verstrichen ist.

## Revendications

1. Circuit pour distinguer entre des signaux de parole et des signaux qui ne sont pas des signaux de parole, pour déterminer qu'un signal audio d'entrée n'est pas un signal de parole lorsque le niveau du signal audio d'entrée est inférieur à un niveau prédéterminé et pour déterminer que le signal audio d'entrée est un signal de parole lorsque le niveau du signal audio est supérieur au niveau prédéterminé, le circuit (2) comprenant :
un comparateur (18) pour comparer le niveau du signal audio d'entrée au niveau prédéterminé ; caractérisé par :
un moyen de commande de changement de niveau (10 à 14) pour élever ou abaisser le niveau du signal de parole d'entrée, entré dans le comparateur (18), d'une quantité prédéterminée en fonction du rapport d'une durée de non-parole du signal audio d'entrée à une durée ayant une valeur égale à une constante prédéterminée ; et,
un amplificateur à gain variable (16) et un filtre passe-bande (17), laissant passer seulement les signaux ayant une fréquence à l'intérieur d'une bande de parole, connecté de telle façon que le signal audio d'entrée le traverse avant d'entrer dans le comparateur (18), le moyen de commande de changement de niveau (10 à 14) servant à élever ou à abaisser le niveau du signal audio d'entrée de la quantité prédéterminée par la commande du gain de l'amplificateur à gain variable (16).

2. Circuit selon la revendication 1, dans lequel le moyen de commande de changement de niveau (10 à 14) comprend :
un premier moyen de comptage (14) pour compter une durée totale de non-parole et pour produire une sortie en fonction d'une sortie du comparateur (18) ;
un second moyen de comptage (13) pour compter la durée du signal audio d'entrée et pour produire un signal de sortie lorsqu'une période de temps ayant une valeur égale à la constante prédéterminée s'est écoulée ; et,
un moyen générateur de signal de commande (10, 11, 12) pour sortir un signal de commande pour changer le niveau du signal de parole d'entrée, entré dans le comparateur (18), d'une quantité prédéterminée, en réponse aux sorties des premier et second moyens de comptage (14, 13).

3. Circuit selon la revendication 2, dans lequel le moyen générateur de signal de commande (10, 11, 12) comprend :
un premier moyen de verrouillage (12) pour verrouiller la sortie du premier moyen de comptage (14) et pour sortir la sortie verrouillée en fonction du fait que la durée totale de non-parole excède la période de temps ayant une valeur égale à la constante prédéterminée ; et,
un second moyen de verrouillage (10, 11) pour verrouiller la sortie du second moyen de comptage (13) et pour sortir un signal de commande pour modifier le niveau du signal de parole d'entrée, entré dans le comparateur (18), d'une quantité prédéterminée en réponse à la sortie du premier moyen de verrouillage (12).

4. Circuit selon la revendication 3, dans lequel le second moyen de verrouillage (10, 11) comprend une pluralité de circuits verrous (10, 11) pour verrouiller, respectivement, une pluralité de sorties du second moyen de comptage (13).

5. Circuit selon la revendication 2, dans lequel une pluralité de périodes de temps sont fixées, chacune ayant une valeur égale à la constante prédéterminée, et dans lequel le second moyen de comptage (13) compte la durée d'entrée du signal audio d'entrée et produit un signal de sortie lorsque chaque période de temps ayant une valeur égale à la constante prédéterminée s'est écoulée.
